(19) **Europäisches Patentamt**

**European Patent Office**

**Office européen des brevets**

(11) **EP 1 621 868 A1**

(12) **EUROPÄISCHE PATENTANMELDUNG**

(43) Veröffentlichungstag:
**01.02.2006 Patentblatt 2006/05**

(51) Int Cl.:
*G01N 21/35* (2006.01)   *G01N 21/27* (2006.01)
*G01J 1/36* (2006.01)   *G01J 1/04* (2006.01)

(21) Anmeldenummer: **05004499.9**

(22) Anmeldetag: **02.03.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **30.07.2004 DE 102004037465**
**22.02.2005 DE 102005008042**

(71) Anmelder: **ABB PATENT GmbH**
**68526 Ladenburg (DE)**

(72) Erfinder:
• **Fabinski, Walter, Dipl.-Ing.**
**65830 Kriftel (DE)**

• **Liedtke, Thomas, Dipl.-Ing.**
**61350 Bad Homburg (DE)**
• **Rathke, Carsten, Dr.Dipl.-Phys.**
**61137 Schöneck (DE)**
• **Nägele, Markus**
**79713 Bad Säckingen (DE)**

(74) Vertreter: **Schmidt, Karl Michael et al**
**ABB Patent GmbH**
**Oberhausener Strasse 33**
**40472 Ratingen (DE)**

(54) **Einrichtung und Verfahren zur Kalibrierung der Empfindlichkeit eines Fotometers**

(57) Einrichtung und Verfahren zur Kalibrierung der Empfindlichkeit eines Fotometers (1) mit einem von einer Strahlungsquelle (2) zur Erzeugung der Messstrahlung durchleuchteten, das Messgas enthaltenden Messraum (3) und einem weiterhin im Strahlengang angeordneten, mindestens eine Fensteröffnung (7, 8) aufweisenden drehbaren Blendenrad (6) zur Modulation der Messstrahlung, dem eine Detektoreinheit (9) mit Auswertung nachgeschaltet ist, wobei dass die Fensteröffnungen (7, 8) des Blendenrades (6) derart gestaltet sind, dass die durchstrahlte Fläche nicht konstant ist, um mindestens ein Referenzsignal ($S_1$ und $S_2$; $S_3$) mit einer von dessen Modulationsfrequenz $f_m$ unterschiedlichen weiteren Modulationsfrequenz $f$, zu erzeugen, aus dem zu Kalibrierungszwecken durch Vergleich mit einem aus einer früheren Kalibrierungsmessung hinterlegten Referenzsignal ($S_1'$ und $S_2'$; $S_3'$) eine Aussage über die Veränderung der Empfindlichkeit des Fotometers (1) ableitbar ist.

1

EP 1 621 868 A1

**Beschreibung**

Die vorliegende Erfindung betrifft eine Einrichtung sowie ein Verfahren zur Kalibrierung der Empfindlichkeit eines Fotometers, insbesondere eines NDIR-Fotometers, mit einem von einer Strahlungsquelle zur Erzeugung der Messstrahlung durchleuchteten, das Messgas enthaltenden Messraum und einem weiteren im Strahlengang angeordneten, mindestens eine Fensteröffnung aufweisenden drehbaren Blendenrad zur Modulation der Messstrahlung, dem eine Detektoreinheit zur Auswertung nachgeschaltet ist.

Bei Fotometern der hier interessierenden Art handelt es sich um Spektrometer, bei denen Strahlung mit der oder dem zu messenden Medien in Wechselwirkung tritt. Dabei wird Licht von einer Strahlungsquelle mit bekannten Parametern ausgesendet und durch eine sogenannte Messküvette oder einen anders gestalteten Messraum geleitet. Am gegenüberliegenden Ende der Messküvette bzw. des Messraums ist eine Detektoreinheit platziert. Innerhalb der Messküvette bzw. des Messraums befindet sich das zu messende Medium - meist ein Messgas - welches zur Analyse hindurch geleitet wird. Im allgemeinen wird auf der Basis der Absorptionsspektroskopie gearbeitet, bei der charakteristische Strahlungsbanden, die energetisch im Licht, d. h. im primären Licht der Strahlungsquelle, enthalten sind innerhalb des zu messenden Mediums von den entsprechenden Molekülen der zu messenden Medienkomponente absorbiert werden. Je nach dem charakteristischen Selektierungsverfahren oder dem verwendetem Wellenlängenbereich unterscheidet man beispielsweise das nicht dispersive Verfahren für den Infraroten (NDIR) und UV-(NDUV) Strahlungsbereich. Des Weiteren ist in diesem Zusammenhang auch ein auf UV-Resonanz-AbsorptionsSpektroskopie (UVRAS) basierendes Verfahren bekannt.

Die Strahlungsabsorption als solche ist dabei ein Maß für die Konzentration des die Absorption bewerkstelligenden zu messenden Mediums oder einer Komponente hiervon. Hierzu durchströmt das zu messende Medium die Messküvette oder den Messraum der Länge nach, wobei im Falle einer Messküvette stirnseitig der im Wesentlichen zylinderförmigen Messküvette Fensteröffnungen für den fotometrischen Strahlengang vorgesehen sind.

Zur genauen Einstellung des Nullpunktes und der Empfindlichkeit von Fotometern wird üblicherweise ein sogenannten Nullgas oder ein Prüfgas bekannter Konzentration verwendet, welches während der Kalibrierung die Messküvette oder den Messraum durchströmt. In Folge dessen stellt sich an der Detektoreinheit ein Messwert ein, welcher zur Kalibrierung mit dem erwarteten Sollwert in Übereinstimmung gebracht wird. Durch diese Verfahren kann eine weitgehend exakte Empfindlichkeitseinstellung vorgenommen werden.

Aus Kostengründen besteht jedoch der Wunsch, alternative Verfahren einzusetzen, auch wenn mit einer verminderten Kalibriergenauigkeit zur rechnen ist.

Aus der DE 31 37 658 A1 geht ein alternatives Verfahren zur Kalibrierung der Empfindlichkeit eines Fotometers hervor, bei welchem Blenden oder Feststofffilter als Hilfsmittel verwendet werden. Es werden gewöhnlich zwei sich in den Zentrumswellenlängen unterscheidende Blenden (Interferenzfilter) oder Feststofffilter (Filterküvette) in periodischer Folge in den Strahlengang eingeführt. Die Filterfunktionen sind dabei so gewählt, dass jeweils nur eine der beiden aufeinanderfolgenden Lichtströme wesentlich vom Messmedium beeinflusst werden kann. Bei der derartig ausgebildeten Fotometern handelt es sich bei der Verwendung von Feststofffiltern, die eine negative Selektivmodulation durchführen, um Korrelationsfotometer, während es sich bei der Verwendung von Blenden, die eine positive Selektivmodulation durchführen, um Bifrequenzfotometer handelt. Beide Ausführungsformen arbeiten nicht - selektiv und können daher nur nicht selektive Driften nachweisen und korrigieren. Daher werden diese im allgemeinen nur bei Fotometern - mit breitbandiger Selektivierung - wie dispersiv arbeitenden Fotometern mit relativ schnellen Detektoreinheiten eingesetzt. Zwecks weiterer Aufwandseinsparung werden bei solchen Fotometern auch Kalibrierimpulse aus der Modulation heraus erzeugt, die zur Referenzierung der Messgröße herangezogen werden. Die Isolierung der Referenzsignale gelingt bei breitbandigen Detektoreinheit relativ einfach, da diese Fotometer mit Modulationsfrequenzen von einigen 10 Hz und größer arbeiten.

Empfindliche nicht dispersive Fotometer - insbesondere NDIR-Fotometer - mit gasgefüllten Detektoreinheiten und spektral schmalbandiger Charakteristik arbeiten jedoch mit Modulationsfrequenzen von < 10 Hz. Hier können die vorstehend genannten Verfahren wegen des 1/f-Frequenzverhaltens nicht ohne weiteres angewandt werden.

Es ist daher die Aufgabe der vorliegenden Erfindung eine geeignete Einrichtung sowie ein Verfahren zur Kalibrierung der Empfindlichkeit eines Fotometers zu schaffen, mit dem/der mit minimalen Aufwand eine Hilfsgröße zur Kalibrierung gewonnen werden kann.

Die Aufgabe wird ausgehend von einer Einrichtung gemäß des Oberbegriffs von Anspruch 1 in Verbindung mit dessen kennzeichnenden Merkmalen gelöst. In verfahrenstechnischer Hinsicht wird die Aufgabe durch Anspruch 7 gelöst. Die jeweils rückbezogenen abhängigen Ansprüche geben vorteilhafte Weiterbildungen der Erfindung wieder.

Die Erfindung schließt die technische Lehre ein, dass Fensteröffnungen des Blendenrades des Fotometers derart gestaltet sind, das die durchstrahlte Fläche nicht konstant ist, um mindestens ein Referenzsignal $S_1$ und $S_2$; $S_3$ mit einer von dessen Modulationsfrequenz $f_m$ unterschiedlichen weiteren Modulationsfrequenz $f_r$ zu erzeugen, aus dem zu Kalibrierungszwecken durch Vergleich mit einem aus einer früheren Kalibrierungsmessung hinterlegten Referenzsignal $S_1'$ und $S_2'$; $S_3'$ eine Aussage über die Veränderung der Empfindlichkeit des Fotometers ableitbar ist.

Der Vorteil der erfindungsgemäßen Lösung liegt insbesondere darin, das hierbei Kalibrierimpulse aus der Modulation heraus erzeugt werden, die für die Kalibrierung nutzbar gemacht werden. Im Prinzip wird ein Referenzsignal mit von der Modulationsfrequenz $f_m$ verschiedener Frequenz $f_r$ erzeugt, durch elektronische Maßnahmen von dieser getrennt und bei Aufgabe von Nullpunktgas oder dergleichen auf diese bezogen. Durch den erfindungsgemäßen Eingriff in die Modulationsfrequenz $f_m$ wird ein Signal bei der weiteren Modulationsfrequenz $f_r$ erzeugt, das sich von $f_m$ in einem festen Verhältnis unterscheidet. Dabei kann sich die weitere Modulationsfrequenz $f_r$ vorzugsweise auf die halbe oder die doppelte Modulationsfrequenz $f_m$ beziehen.

Die Einflussfaktoren auf die Empfindlichkeit des Fotometers sind vorzugsweise die Strahlungsquellenintensität S, die Küvettenverschmutzung K und die Empfindlichkeitsverluste E der Detektoreinheit. Das aufgrund der vorstehend erläuterten Modulation generierte Referenzsignal ist ein Maß für das Produkt aus den vorstehend genannten Einflussfaktoren S, K und E und wird damit erfindungsgemäß als Referenz herangezogen. Vorraussetzung ist jedoch, dass Nullgas durch das Messsystem hindurch geschickt wird, da es sonst auch Einflüsse durch das Messgas abbildet.

Der durch die Strahlungsquelle durchstrahlte Messraum ist vorzugsweise als geteilte Messküvette mit einander gegenüberliegenden Fenstern zum Passieren der von der Strahlungsquelle ausgehenden Messstrahlung ausgebildet. Es ist jedoch auch denkbar, das ein Prozessraum selbst als Messraum genutzt wird, so dass es sich dann um ein sogenanntes Freistrahlverfahren handelt. Auch hierauf ist die erfindungsgemäße Lösung anwendbar.

Die weitere Modulationsfrequenz $f_r$ steht wie bereits erwähnt in einem festen Verhältnis zu der Modulationsfrequenz $f_m$. Vorzugsweise ist die weitere Modulationsfrequenz $f_r$ auf die Hälfte oder das Doppelte der Modulationsfrequenz $f_m$ festgelegt. Die Stärke und Phasenlage der halben oder doppelten Modulationsfrequenz $f_m$ entspricht dem Referenzsignal.

Soll die weitere Modulationsfrequenz fr die Hälfte der Modulationsfrequenz $f_m$ betragen, so kann dies erreicht werden, indem das Blendenrad durch eine Asymmetrie erzeugende Teilabdeckung einer der Fensteröffnungen pro Umdrehung zwei Modulationen erzeugt, wodurch die zwei sich voneinander unterscheidenden Referenzsignale $S_1$ und $S_2$ entstehen. Hierfür benötigt das Blendenrad eine 2-fache Anzahl von Fensteröffnungen. Durch die eine Asymmetrie zur zweiten Fensteröffnung erzeugende Teilabdeckung der ersten Fensteröffnung entsteht bei der Modulation ein Signal, das mit der Achsenfrequenz einhergeht. Dies entspricht der gewünschten halben Modulationsfrequenz $f_r = f_m/2$.

Soll die weitere Modulationsfrequenz $f_r$ auf das Doppelte der Modulationsfrequenz $f_m$ festgelegt sein, so ist dies realisierbar, indem Überblendungen von einer Küvettenhälfte auf die andere der geteilten Messküvette derart ausgeführt sind, dass die durchstrahlte Fläche beim Übergang nicht konstant ist, wodurch das Referenzsignal $S_3$ entsteht.

Ergänzend sei darauf hingewiesen, dass das Blendrad zur Durchführung einer gegenphasigen Modulation des Messstrahls im Rahmen der vorliegenden Erfindung mindestens vier Fensteröffnungen aufzuweisen hat.

Vorzugsweise umfasst die Detektoreinheit des Fotometers einen gasgefüllten Empfänger, dem eine Auswerteelektronik mit Speicherelement zur Abspeicherung mindestens des zuletzt ermittelten Referenzsignals $S_1'$ und $S_2'$ bzw. $S_3$ nachgeschaltet ist. Um die maximale Empfindlichkeit zu erhalten, sollte bei niedrigen Modulationsfrequenzen von <10 Hz gearbeitet werden. Dadurch erhält das Kalibrierungsverfahren ein schmalbandiges Verhalten. Die Messung der Konzentration im Messmedium geht bei der erfindungsgemäßen Lösung in bekannter Weise bei der Modulationsfrequenz $f_m$ vonstatten, wobei bei Nullgasaufgabe ein minimales Restsignal am Ausgang auftritt.

Gemäß einer die Erfindung verbessernden Maßnahme wird die Amplitude und Phasenlage des Referenzsignals $S_1 - S_2$ bzw. $S_3$ im Verhältnis zum hinterlegten Referenzsignal $S_1' - S_2'$ bzw. $S_3'$ ermittelt, um hieraus den Alterungsstatus des Fotometers zu bestimmen. Dieser kann somit in besonders einfacher Weise durch entsprechende Signalverarbeitung ermittelt werden.

Gemäß einer weiteren die Erfindung verbessernde Maßnahme wird vorgeschlagen, das zur Isolierung des Referenzsignals $S_1 — S_2$ bzw. $S_3$ aus dem von der Detektoreinheit empfangenen Messsignal durch die Auswerteelektronik eine digitale Filterung mit phasenabhängiger Gleichrichtung und Faltung über ein vorgegebenes Signal durchgeführt wird. Hierdurch ist eine besonders präzise Isolierung des Referenzsignals $S_1 - S_2$ bzw. $S_3$ aus dem Signalgemisch möglich.

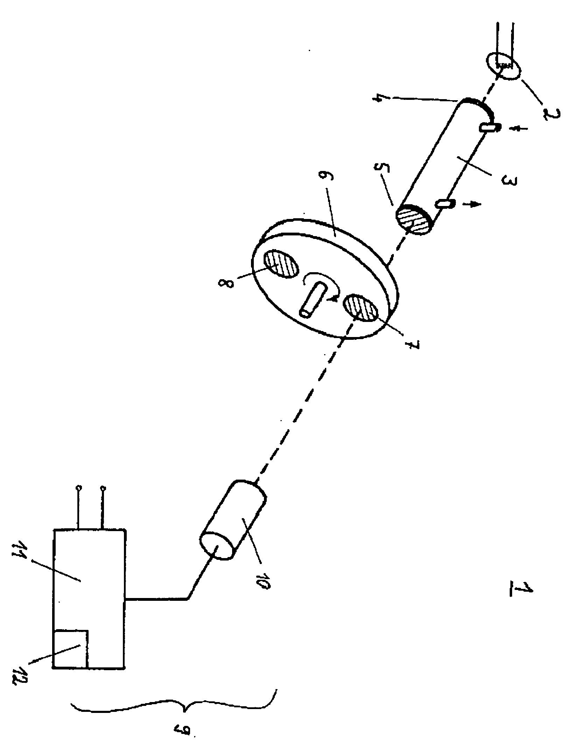

Weitere die Erfindung verbessernde Maßnahmen werden nachstehend gemeinsam mit der Beschreibung eines bevorzugten Ausführungsbeispiels der Erfindung anhand der einzigen Figur näher dargestellt. Die Figur zeigt eine schematische Darstellung eines Fotometers mit einer Einrichtung zur Kalibrierung der Empfindlichkeit desselben.

Das in der Figur dargestellte Fotometer 1 besteht im Wesentlichen aus einer Strahlungsquelle 2 zur Erzeugung der NDIR-Messstrahlung, welche einen nachgeschalteten als geteilte Küvette ausgeführten Messraum 3 durchleuchtet. Zur Durchleuchtung des Messraums 3 weist dieser je endseitig Fensteröffnungen 4 und 5 auf, durch welche die Messstrahlung ungehindert passieren kann. Im Strahlengang ist dem Messraum 3 ein drehbares Blendenrad 6 nachgeordnet. Das Blendenrad 6 weist zwei gegenüberliegend zu einander angeordnete Fensteröffnungen 7 und 8 auf, welche der Modulation der Messstrahlung dienen, also diese in definierter Weise beeinflussen. Am Ende des Strahlenganges befindet sich eine Detektoreinheit 9, die einen gasgefüllten Empfänger 10 umfasst, dem eine Auswerteelektronik 11 mit integriertem Speicherelement 12 nachgeschaltet ist.

Die Fensteröffnungen 7 und 8 des Blendenrades 6 sind erfindungsgemäß derart gestaltet, das die durchstrahlte Fläche nicht konstant ist. Hierdurch wird je nach Modulationsfrequenz mindestens ein Referenzsignal $S_1$ und $S_2$ bzw. $S_3$ mit einer von dessen Modulationsfrequenz $f_m$ unterschiedlichen weiteren Modulationsfrequenz $f_r$ erzeugt. Dabei kann die weitere Modulationsfrequenz $f_r$ auf die Hälfte oder das Doppelte der Modulationsfrequenz $f_m$ festgelegt sein. Das mit einem aus einer früheren Kalibrierungsmessung im Speicherelement 12 der Auswerteelektronik 11 hinterlegten Referenzsignal $S_1$' - $S_2$' bzw. $S_3$' wird mit dem gemessenen Referenzsignal $S_1$ - $S_2$ bzw. $S_3$ verglichen, um zu Kalibrierungszwecken hieraus eine Aussage über die Veränderung der Empfindlichkeit abzuleiten.

Nachfolgend werden die mathematischen Zusammenhänge für die Fälle, dass die weitere Modulationsfrequenz $f_r$ auf die Hälfte oder auf das Doppelte der Modulationsfrequenz $f_m$ festgelegt ist, erläutert:

Für $f_r = f_m/2$ gilt:

Vorrausgesetzt wird, dass eine Umdrehung des Blendenrades 6 zwei Modulationen erzeugt, wobei diese sich erfindungsgemäß unterscheiden. Für das erste Signal $S_1$ mit der doppelten Frequenz der Umdrehung des Blendenrades 6 und ohne Berücksichtigung der Asymmetrie gilt:

$$S_1 = E \cdot S \cdot \left(1 - K \cdot e^{-\alpha L}\right) \qquad [\text{ Formel 1}]$$

Mit $\alpha$ = Gasabsorptionskoeffizient, L = Absorptionsweglänge, S = Strahlungsquellenintensität, K = Küvettenverschmutzung, E = Empfindlichkeitsverluste der Detektoreinheit.

Für das zweite Signal $S_2$ gilt bedingt durch die eingefügte Asymmetrie A der Fensteröffnung 7, 8 und mit Frequenz der Umdrehung des Blendenrades:

$$S_2 = E \cdot S \cdot \left(1 - K \cdot e^{-\alpha L} + A\right) \qquad [\text{ Formel 2 }]$$

Die Kalibrierung wird stets auf eine zeitlich frühe Kalibrierung bezogen. Wird nun die bei der früheren Kalibrierungsmessung hinterlegte Differenz der Signale $S_1$ und $S_2$ mit der Differenz der aktuell gemessenen Signale $S_1$' und $S_2$' verglichen, so ergibt sich eine direkte Aussage über die Veränderung der Empfindlichkeit des Fotometers gemäß des Produkts aus Strahlerintensität S, Küvettenverschmutzung K und Empfindlichkeitsverluste des Empfängers E. Hieraus resultiert ein entsprechender Kalibrierfaktor k mit dem die aktuell berechneten Konzentrationswerte korrigierte werden müssen:

$$\frac{S_1 - S_2}{S_1' - S_2'} = \frac{E \cdot S \cdot K}{(E \cdot S \cdot K)'} = k \qquad [\text{ Formel 3 }]$$

Liegen weitere Informationen über die Faktoren S und K vor, so kann auch direkt auf die veränderte Empfindlichkeit des Empfängers geschlossen werden.

Für $f_r = 2 f_m$ gilt:

Es gilt dem Prinzip nach ebenfalls für das Signal S3 bezüglich der Frequenz 2 fm [Formel 1]. Die Kalibrierung wird wie vorstehend angegeben ebenfalls immer auf eine frühere Kalibrierungsmessung bezogen. Wird nun das bei der früheren Kalibrierungsmessung hinterlegte 2f-Signal $S_3$ mit dem aktuell gemessenen 2f-Signal $S_3$' verglichen, so ist wiederum eine direkte Aussage über die Veränderung der Empfindlichkeit des Fotometers möglich. Aus dem hieraus abzuleitenden Kalibrierungsfaktor k muss die aktuell gemessene respektive berechnete Gaskonzentration wie folgt korrigiert werden:

$$\frac{S_3}{S_3'} = \frac{E \cdot S \cdot K}{(E \cdot S \cdot K)'} = k \qquad [\text{Formel 4}]$$

Abschließend sei darauf hingewiesen, dass es neben den vorstehend angegebenen exemplarischen Berechnungsmethoden für den Kalibrierungsfaktor k auch weitere Berechnungsmethoden gibt, welche jedoch alle auf der Erkenntnis eines von der Trägerfrequenz verschiedenen Signalanteils, beispielsweise f/2- oder 2f-Signalanteil, beruhen.

Mit der erfindungsgemäßen Einrichtung und dem Verfahren zur Gewinnung des Referenzsignals $S_1$ - $S_2$; $S_3$ ist die Realisierung eines Fotometers, insbesondere eines NIDR-Fotometers, mit einfacher Möglichkeit zur Kalibrierung ohne weitere Hilfsmittel machbar.

**Bezugszeichenliste**

1 Fotometer
2 Strahlungsquelle
3 Messraum
4 Fensteröffnung
5 Fensteröffnung
6 Blendenrad
7 Fensteröffnung (Modulation)
8 Fensteröffnung (Modulation)
9 Detektoreinheit
10 gasgefüllter Empfänger
11 Auswerteelektronik
12 Speicherelement

**Patentansprüche**

1. Einrichtung zur Kalibrierung der Empfindlichkeit eines Fotometers (1) mit einem von einer Strahlungsquelle (2) zur Erzeugung der Messstrahlung durchleuchteten, das Messgas enthaltenden Messraum (3) und einem weiterhin im Strahlengang angeordneten, mindestens eine Fensteröffnung (7, 8) aufweisenden drehbaren Blendenrad (6) zur Modulation der Messstrahlung, dem eine Detektoreinheit (9) mit Auswertung nachgeschaltet ist,
   **dadurch gekennzeichnet, dass** die Fensteröffnungen (7, 8) des Blendenrades (6) derart gestaltet sind, dass die durchstrahlte Fläche nicht konstant ist, um mindestens ein Referenzsignal ($S_1$ und $S_2$; $S_3$) mit einer von dessen Modulationsfrequenz $f_m$ unterschiedlichen weiteren Modulationsfrequenz $f_r$ zu erzeugen, aus dem zu Kalibrierungszwecken durch Vergleich mit einem aus einer früheren Kalibrierungsmessung hinterlegten Referenzsignal ($S_1$'und $S_2$'; $S_3$') eine Aussage über die Veränderung der Empfindlichkeit des Fotometers (1) ableitbar ist.

2. Einrichtung nach Anspruch 1,
   **dadurch gekennzeichnet, dass** der Messraum (3) als geteilte Messküvette mit einander gegenüberliegenden Fensteröffnungen (4, 5) zum Passieren der von der Strahlungsquelle (2) ausgehenden Messstrahlung ausgebildet ist.

3. Einrichtung nach Anspruch 1 oder 2,
   **dadurch gekennzeichnet, dass** die weitere Modulationsfrequenz $f_r$ auf die Hälfte der Modulationsfrequenz $f_r = f_m/2$ festgelegt ist, indem das Blendenrad (6) durch eine Asymmetrie erzeugende Teilabdeckung einer der Fensteröffnungen (7, 8) pro Umdrehung zwei Modulationen erzeugt, wodurch die zwei sich voneinander unterscheidenden Referenzsignale ($S_1$ und $S_2$) entstehen.

4. Einrichtung nach Anspruch 2,
   **dadurch gekennzeichnet, dass** die weitere Modulationsfrequenz f, auf das Doppelte der Modulationsfrequenz $f_r = 2f_m$ festgelegt ist, indem Überblendungen von einer Küvettenhälfte auf die andere des als geteilte Messküvette ausgeführten Messraum (3) derart ausgeführt sind, dass die durchstrahlte Fläche beim Übergang nicht konstant ist, wodurch das Referenzsignal ($S_3$) entsteht.

5. Einrichtung nach Anspruch 1,
   **dadurch gekennzeichnet, dass** das Blendrad (6) zur Durchführung einer gegenphasigen Modulation des Messstrahls mindestens vier Fensteröffnungen aufweist.

6. Einrichtung nach Anspruch 1,
   **dadurch gekennzeichnet, dass** die Detektoreinheit (9) einen gasgefüllten Empfänger (10) umfasst, dem eine Auswerteelektronik (11) mit Speicherelement (12) zur Abspeicherung zumindest des zuletzt ermittelten Referenzsignals ($S_1$'und $S_2$'; $S_3$') nachgeschaltet ist.

7. Verfahren zur Kalibrierung der Empfindlichkeit eines Fotometers mit einer Einrichtung gemäß eines der vorstehenden Ansprüche,

**dadurch gekennzeichnet, dass** über die Fensteröffnungen (7, 8) des der Modulation des Messsignals dienenden Blendenrades (6) ein Referenzsignal ($S_1$-$S_2$; $S_3$) mit einer von dessen Modulationsfrequenz $f_m$ unterschiedlichen weiteren Modulationsfrequenz $f_r$ erzeugt wird, das mit einem aus einer früheren Kalibrierungsmessung hinterlegten Referenzsignal ($S_1'$-$S_2'$; $S_3'$) verglichen wird, um zu Kalibrierungszwecken hieraus eine Aussage über die Veränderung der Empfindlichkeit abzuleiten.

8. Verfahren nach Anspruch 7,
**dadurch gekennzeichnet, dass** die weitere Modulationsfrequenz $f_r$ auf die Hälfte oder das Doppelte der Modulationsfrequenz $f_m$ festgelegt wird.

9. Verfahren nach Anspruch 7,
**dadurch gekennzeichnet, dass** die Modulation bei einer Frequenz von <10Hz durchgeführt wird, um ein schmalbandiges Verhalten zu erzielen.

10. Verfahren nach Anspruch 7,
**dadurch gekennzeichnet, dass** die Amplitude und Phasenlage des Referenzsignals ($S_1$-$S_2$; $S_3$) im Verhältnis zum hinterlegten Referenzsignal ($S_1'$-$S_2'$; $S_3'$) ermittelt wird, um hieraus den Alterungsstatus des Fotometers zu bestimmen.

11. Verfahren nach Anspruch 7,
**dadurch gekennzeichnet, dass** zur Isolierung des Referenzsignals ($S_1$-$S_2$; $S_3$) aus dem von der Detektoreinheit (9) empfangenen Messsignal durch die Auswerteelektronik (11) eine digitale Filterung mit phasenabhängiger Gleichrichtung und Faltung über ein vorgegebenes Signal durchgeführt wird.

Europäisches
Patentamt

**EUROPÄISCHER RECHERCHENBERICHT**

Nummer der Anmeldung

EP 05 00 4499

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 26 14 181 A1 (LEYBOLD-HERAEUS GMBH & CO KG; LEYBOLD-HERAEUS GMBH, 5000 KOELN; LEYBOL) 20. Oktober 1977 (1977-10-20) * Seite 4, Zeile 21 - Seite 8, Zeile 19 * * Seite 9, Zeile 17 - Seite 18, Zeile 17; Abbildungen 1-7 * ----- | 1-11 | G01N21/35 G01N21/27 G01J1/36 G01J1/04 |
| X | EP 0 508 182 A (LFE LABORATORIUM FUER INDUSTRIELLE FORSCHUNG GMBH & CO., ENTWICKLUNGS-) 14. Oktober 1992 (1992-10-14) * Spalte 4, Zeile 21 - Zeile 57; Abbildung 1 * * Spalte 6, Zeile 21 - Zeile 47; Abbildung 2 * ----- | 1-8 | |
| X | DD 206 217 A1 (KUEHN,MANFRED,DD; GERSCHING,DETLEF,DD; SCHROETER,FRITZ,DD) 18. Januar 1984 (1984-01-18) * Seite 4, Zeile 8 - Zeile 21 * * Seite 6, Zeile 1 - Zeile 13 * * Seite 7, Zeile 13 - Seite 9, Zeile 23; Abbildungen 1,3 * ----- | 1-4,7,8 | |
| X | DD 214 447 A1 (INSTITUT FUER REGELUNGSTECHNIK,DD) 10. Oktober 1984 (1984-10-10) * Seite 6; Abbildungen 1,2 * ----- | 1-4,7,8 | **RECHERCHIERTE SACHGEBIETE (Int.Cl.7)** G01N G01J |
| A | DE 44 03 763 A1 (SIEMENS AG, 80333 MUENCHEN, DE) 10. August 1995 (1995-08-10) * Spalte 2, Zeile 1 - Zeile 15; Abbildung 1 * ----- | 6 | |
| D,A | DE 31 37 658 A1 (H.MAIHAK AG; H. MAIHAK AG, 2000 HAMBURG, DE) 7. April 1983 (1983-04-07) * das ganze Dokument * ----- | | |

Der vorliegende Recherchenbericht wurde für alle Patentansprüche erstellt

| Recherchenort | Abschlußdatum der Recherche | Prüfer |
|---|---|---|
| München | 7. November 2005 | Duijs, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 00 4499

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-11-2005

| Im Recherchenbericht angeführtes Patentdokument | | Datum der Veröffentlichung | Mitglied(er) der Patentfamilie | | Datum der Veröffentlichung |
|---|---|---|---|---|---|
| DE 2614181 | A1 | 20-10-1977 | FR | 2346711 A1 | 28-10-1977 |
| | | | GB | 1566157 A | 30-04-1980 |
| | | | IT | 1104569 B | 21-10-1985 |
| | | | US | 4101221 A | 18-07-1978 |
| EP 0508182 | A | 14-10-1992 | DE | 4111187 A1 | 08-10-1992 |
| DD 206217 | A1 | 18-01-1984 | KEINE | | |
| DD 214447 | A1 | 10-10-1984 | KEINE | | |
| DE 4403763 | A1 | 10-08-1995 | KEINE | | |
| DE 3137658 | A1 | 07-04-1983 | EP | 0076356 A1 | 13-04-1983 |
| | | | US | 4641973 A | 10-02-1987 |

EPO FORM P0461

Für nähere Einzelheiten zu diesem Anhang : siehe Amtsblatt des Europäischen Patentamts, Nr.12/82